# EUROPÄISCHE PATENTSCHRIFT

(11) **EP 0 539 887 B1**
(45) Veröffentlichungstag und Bekanntmachung des Hinweises auf die Patenterteilung: **05.02.1997**
(21) Anmeldenummer: 92118192.1
(22) Anmeldetag: 23.10.1992
(51) Int. Cl.: F16P 3/12, E05F 15/00

(54) **Nadelkontaktelement**
Contact needle
Aiguille de contact

(30) Priorität: 31.10.1991 DE 4135890
(43) Veröffentlichungstag der Anmeldung: 05.05.1993
(73) Patentinhaber: Beckhausen, Karlheinz, 50931 Köln (DE)
(72) Erfinder: Beckhausen, Karlheinz, 50931 Köln (DE)
(74) Vertreter: Nau, Walter, Dipl.-Ing.

(56) Entgegenhaltungen:
- DE-A- 3 411 198
- DE-U- 8 913 363

## Beschreibung

Die Erfindung betrifft eine Sicherheitskontaktschiene für kraftbetätigte Anlagen sowie zur Absicherung von Maschinen oder Räumen mit einem ersten und einem zweiten Abschnitt, die isoliert voneinander angeordnete elektrisch leitende Zonen aufweisen, die bei einer durch Verformung der Sicherheitskontaktschiene bewirkten gegenseitigen Berührung einen Schaltimpuls auslösen, der über mit den Zonen verbundenen Schaltleitungen einer Auswerteinheit zuführbar ist.

Eine derartige Sicherheitskontaktschiene ist aus dem DE-Gbm 89 13 363.3 bekannt. Diese Sicherheitskontaktschiene ist beispielsweise bei kraftbetätigten Anlagen wie Rolltoren, Rollgittem usw. wie auch für Hebe-, Arbeitsbühnen und dergl. sowie zur Absicherung von Maschinen oder Räumen, z.B. als Trittsicherung verwendbar. Die Sicherheitskontaktschiene wird üblicherweise als Meterware hergestellt und es können einzelne Schienen mittels Verbindungsstücken aneinandergefügt und mit Endstücken verschlossen werden. Die notwendigen Schaltleitungen sind bei der in dem Gebrauchsmuster beschriebenen Sicherheitskontaktschiene mit Nieten, Schrauben, Lötverbindungen oder Klammem befestigt. Diese Verbindungsarten haben sich zwar im Prinzip bewährt, weisen aber dennoch einige Schwächen bei der Befestigungshaltbarkeit der Schaltleitungen mit den elektrisch leitenden Zonen der Sicherheitskontaktschiene auf.

Weiterhin ist ein Verfahren zur Signalerzeugung und Signalauswertung unter Verwendung eines Gummikörpers aus der DE-A 39 11 198 bekannt. Hierbei ist ein Steckanschluß vorgesehen, der in ein Gummihohlprofil eines Garagentors einsteckbar und mit einer Wheatstone-Brücke verschaltet ist.

Der Erfindung liegt die Aufgabe zugrunde, eine Sicherheitskontaktschiene bereitzustellen, bei der die Schaltleitungen betriebssicher ohne Beeinträchtigung der Verformbarkeit der Sicherheitskontaktschiene an den elektrisch leitenden Zonen befestigbar sind.

Diese Aufgabe wird dadurch gelöst, daß in die elektrisch leitenden Zonen der beiden Abschnitte Nadelkontaktelemente eingesetzt sind, an denen die Schaltleitungen befestigbar sind, daß das Nadelkontaktelement einen Nadelkontaktstift und einen Nadelkontaktkopf mit einer Befestigungsvorrichtung für die Schaltleitung aufweist, daß der Nadelkontaktstift ausgehend von dem kopfseitigen Ende einen Durchmesser aufweist, der bis zu dem gegenüberliegenden, freien Ende zunimmt und daß an dem freien Ende des Nadelkontaktstiftes eine Nadelspitze angeformt ist. Derartige Nadelkontaktelemente sind als separates Bauteil einfach fertigbar und können ggfs. in einer einheitlichen Größe für verschiedene Sicherheitskontaktschienengrößen verwendet werden. Die Nadelkontaktelemente können in vorgefertigte Bohrungen der Zonen eingeschoben werden; normalerweise ist aber vorgesehen, sie direkt, also ohne vorherige Bearbeitung in die Zonen einzusetzen bzw. einzupressen. Dabei bieten die Nadelkontaktelemente eine gute und zuverlässige Übertragung der Schaltimpulse von den elektrisch leitenden Zonen zu den Schaltleitungen und weisen selbst nach längerem Gebrauch der Sicherheitskontaktschiene einen sicheren Sitz in den Zonen auf.

Der Nadelkontaktstift wird dabei in der Regel vollständig in die Zone eingesetzt und weist eine Länge auf, die einen sicheren Halt und gute Übertragung der Schaltimpulse gewährleistet. Die Konizität durch den zunehmenden Durchmesser bewirkt einen sehr sicheren Halt des Nadelkontaktelementes in den elektrisch leitenden Zonen oder in bzw. an dem in den elektrischen Zonen eingelassenen elektrischen Leiter. Dabei genügt es, daß die Konizität über die Länge des Nadelkontaktstiftes nur wenige zehntel Millimeter beträgt. Die Nadelspitze ermöglicht ein problemloses Einsetzen des Nadelkontaktelementes in die elektrisch leitenden Zonen.

In Weiterbildung der Erfindung ist der erste Abschnitt mit der ersten elektrisch leitenden Zone als Gummihohlprofil und der zweite Abschnitt mit der zweiten elektrisch leitenden Zone als in dem Gummihohlprofil angeordnete schneidenartige Rippe ausgebildet. Diese Ausbildung ist die meistgebräuchliche bei einer Sicherheitskontaktschiene, in besonderen Anwendungsfällen ist aber auch jede anders ausgebildete Sicherheitskontaktschiene im Rahmen der Erfindung mit den erfindungsgemäßen Nadelkontaktelementen ausrüstbar.

In Weiterbildung der Erfindung sind in den Zonen elektrische Leiter eingelassen, in deren stirnseitigen Endbereichen jeweils ein Nadelkontaktelement einsetzbar ist. Derartige elektrische Leiter sind vorzugsweise als biegsamer Draht, bevorzugt zusammengesetzt aus einer Vielzahl von Einzeldrähten, gefertigt. Dabei ist das Nadelkontaktelement in dem an den Leiter angrenzenden Bereich in die elektrisch leitenden Zonen einsetzbar, oder aber bei den aus Einzeldrähten gefertigten Leitem direkt in diesen einsetzbar. Dadurch wird eine besonders widerstandsarme- also gut leitende -Übertragung der Schaltimpulse ermöglicht.

In weiterer Ausgestaltung ist der Nadelkontaktkopf zentrisch oder exzentrisch an einem Ende des Nadelkontaktstiftes angeordnet. Die Wahl der Anordnung richtet sich nach der Anforderung, die durch die Ausbildung der Sicherheitskontaktschiene vorgegeben ist.

In Weiterbildung der Erfindung ist die Befestigungsvorrichtung an dem Nadelkontaktkopf des Nadelkontaktelementes als Schraubklemmvorrichtung oder als Federklemmvorrichtung ausgebildet. Diese sind bevorzugte Befestigungsvorrichtungen, die einen sicheren und zuverlässigen Halt für die Schaltleitung gewährleisten. Dabei ermöglicht die Federklemmvorrichtung eine besonders einfache Montage der Schaltleitung ohne zusätzliches Werkzeug. Selbstverständlich sind aber andere als die beschriebenen Klemmvorrichtungen zur Befestigung der Schaltleitungen denkbar.

In weiterer Ausgestaltung schließt die Nadelkontaktspitze einen Winkel von 50° bis 90°, vorzugsweise aber 70° ein. Insbesondere beim Einstecken in die in die Zonen eingelassenen elektrischen Leiter gewährleistet die erfindungsgemäß ausgebildete Nadelspitze, daß der Nadelkontaktstift genau entlang des Leiters bzw. innerhalb des Leiters verläuft.

In Weiterbildung der Erfindung weisen die elektrisch leitenden Zonen an dem befestigungsseitigen Ende des Nadelkontaktelementes Ausnehmungen oder Absätze auf. Diese Ausnehmungen oder Absätze sind vorzugsweise so ausgebildet, daß der Nadelkontaktkopf vollständig in diese Ausnehmung hineinragt. Somit stehen an den Enden der Sicherheitskontaktschiene, an denen die Schaltleitungen befestigt werden, keine Befestigungselemente über und die Sicherheitskontaktschiene, insbesondere in der Ausbildung als Gummihohlprofil kann von einem einfachen Verschlußdeckel verschlossen werden.

Weitere Ausgestaltungen der Erfindung sind der Zeichnungsbezeichnung zu entnehmen, in der in den Figuren dargestellte Ausführungsbeipiele näher beschrieben sind.
Es zeigen:
- Fig. 1: ein Gummihohlprofil mit Schaltleitungen, die mittels Nadelkontaktelementen in den elektrisch leitenden Zonen befestigt sind;
- Fig. 2: ein Nadelkontaktelement mit zentrisch angeordnetem Kopf und
- Fig. 3: ein Nadelkontaktelement mit exzentrisch an dem Nadelkontaktstift angeordneten Kopf.

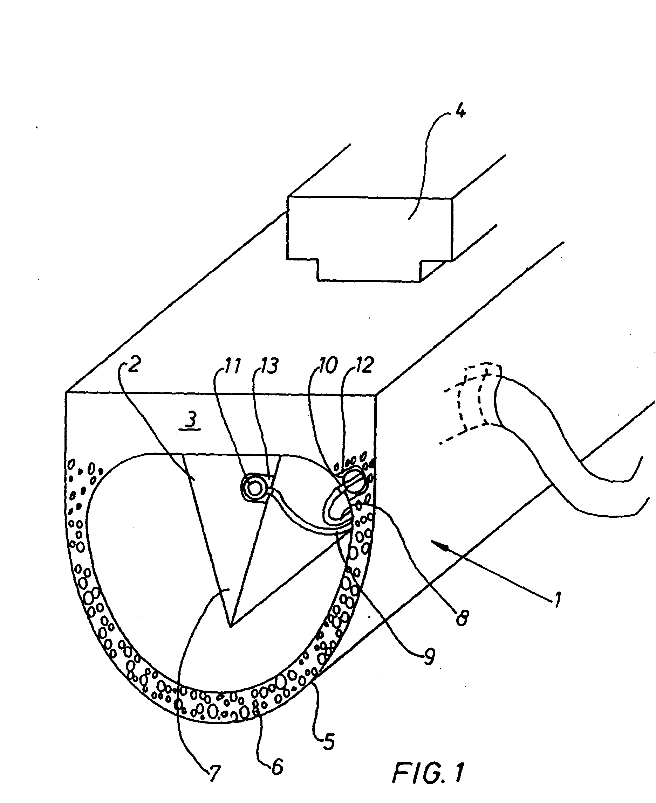

Die Sicherheitskontaktschiene nach Fig. 1 weist im wesentlich ein Gummihohlprofil 1 auf, wobei im Inneren des Gummihohlprofils 1 eine aus elektrisch leitendem Gummi hergestellte Rippe 2 angebracht ist, die mit ihrer Grundfläche an dem elektrisch nicht leitenden Rücken 3 des Gummihohlprofils 1 gegenüberliegend einem Träger 4 befestigt ist. Der Träger 4 ist T-förmig ausgebildet und beispielsweise in einer entsprechenden Ausnehmung eines Rolltores einschiebbar und befestigbar. Gegenüberliegend dem Träger 4 schließt sich an den Rücken 3 eine Wandung 5 an, die das eigentliche Gummihohlprofil 1 bildet und beispielsweise durch die Einlagerung von Graphit 6 elektrisch leitend ist. Ein schneidenförmig ausgebildeter Bereich 7 der Rippe 2 weist zu der elektrisch leitenden Wandung 5. Bei Auftreffen der Wandung 5 auf ein Hindernis verformt sich die Wandung 5 soweit, bis sie auf den schneidenförmig ausgebildeten Bereich 7 der Rippe 2 auftrifft und durch das Zusammentreffen von zwei elektrisch leitenden Zonen ein Schaltimpuls ausgelöst wird. Diese Schaltimpulse werden über Schaltleitungen 8, 9 zu einer Auswerteinrichtung weitergeleitet, wobei die Auswerteinrichtung beispielsweise das Abstoppen der Antriebsmotoren des Rollgitters veranlaßt.

Die Schaltleitungen 8, 9 sind mittels Nadelkontaktelementen 10, 11 in den elektrisch leitenden Zonen der Wandung 5 sowie der Rippe 2 befestigt. Das Nadelkontaktelement 10 weist eine Befestigungsvorrichtung auf, die als Schraubklemmvorrichtung ausgebildet ist, während die Befestigungseinrichtung des Nadelkontaktelementes 11 als Federklemmvorrichtung ausgebildet ist. Ein Absatz 12, 13 ist jeweils so angeordnet und ausgebildet, daß der Kopf 14a, 14b eines Nadelkontaktelementes 10, 11 vollständig in diesen hineinragt.

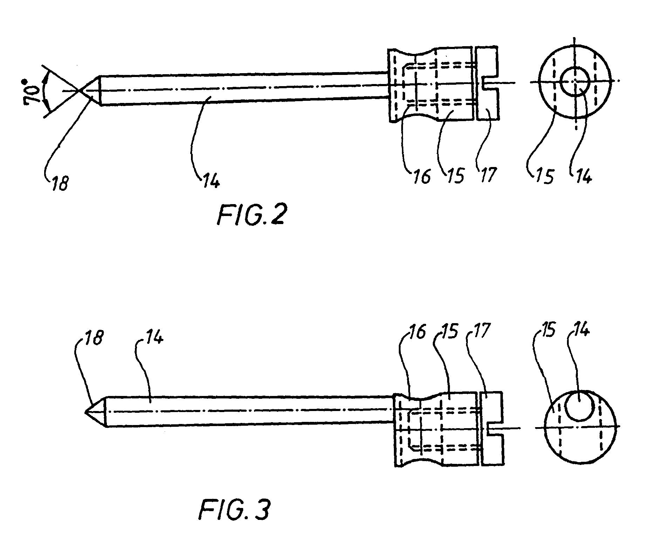

Die Nadelkontaktelemente 10, 11 weisen je einen Nadelkontaktstift 14 auf, der sich in einem Nadelkontaktkopf 15 fortsetzt. Der Nadelkontaktkopf 15 weist eine Querbohrung 16 auf, in die die Schaltleitung 8, 9 mit einem abisolierten Leitungsteil einschiebbar ist. Eine von der Stirnseite des Nadelkontaktkopfes einschraubbare Schraube 17 preßt den abisolierten Teil der Schaltleitung 8, 9 an die Wandung der Querbohrung 16 und gewährleistet einen sicheren und elektrisch gut leitenden Sitz. In dem Ausführungsbeispiel nach Fig. 2 ist der Nadelkontaktkopf zentrisch an einer Stirnseite des Nadelkontaktstiftes 14 befestigt, während in dem Ausführungsbeispiel nach Fig. 3 der Nadelkontaktkopf exzentrisch an dem Nadelkontaktstift 14 befestigt ist. An dem dem kopfseitigen Ende gegenüberliegenden freien Ende des Nadelkontaktstiftes 14 ist eine Nadelspitze 18 angeformt, die einen Winkel von 70° einschließt. Der Nadelkontaktstift 14 weist ausgehend von dem kopfseitigen Ende einen Durchmesser auf, der bis zum gegenüberliegenden freien Ende zunimmt. Dabei beträgt der Durchmesser des Nadelkontaktstiftes 14 in den kopfseitigen Bereich beispielsweise ca. 1,2 mm, während er in dem Bereich der Nadelkontaktspitze 18 einen Durchmesser von ca. 1,4 mm aufweist. Im übrigen beträgt die Länge des Nadelkontaktstiftes von der Nadelkontaktspitze 18 bis zu dem Kopf 14 ca. 15 mm, während der Nadelkontaktkopf ohne die Schraube eine Länge von ca. 4 mm aufweist. Der Durchmesser des Nadelkontaktkopfs beträgt in dem Ausführungsbeispiel ca. 3,5 mm.

## Patentansprüche

1. Sicherheitskontaktschiene für kraftbetätigte Anlagen sowie zur Absicherung von Maschinen oder Räumen mit einem ersten und einem zweiten Abschnitt, die isoliert voneinander angeordnete elektrisch leitende Zonen aufweisen, die bei einer durch Verformung der Sicherheitskontaktschiene bewirkten gegenseitigen Berührung einen Schaltimpuls auslösen, der über mit den Zonen verbundenen Schaltleitungen einer Auswerteinheit zuführbar ist,
**dadurch gekennzeichnet**, daß in die Zonen Nadelkontaktelemente (10, 11) eingesetzt sind, an denen die Schaltleitungen (8, 9) befestigbar sind, daß das Nadelkontaktelement (10, 11) einen Nadelkontaktstift (14) und einen Nadelkontaktkopf (15) mit einer Befestigungsvorrichtung für die Schaltleitung (8, 9) aufweist, daß der Nadelkontaktstift (14) ausgehend von dem kopfseitigen Ende einen Durchmesser aufweist, der bis zu dem gegenüberliegenden, freien Ende zunimmt und daß an dem freien Ende des Nadelkontaktstiftes (14) eine Nadelspitze (18) angeformt ist.

2. Sicherheitskontaktschiene nach Anspruch 1,
**dadurch gekennzeichnet**, daß der erste Abschnitt als Gummihohlprofil (1) und der zweite Abschnitt als in dem Gummihohlprofil (1) angeordnete schneidenartige Rippe (2) ausgebildet sind.

3. Sicherheitskontaktschiene nach einem der vorherigen Ansprüche,
**dadurch gekennzeichnet**, daß in den Zonen elektrische Leiter eingelassen sind, in deren stimseitigen Endbereich jeweils ein Nadelkontakt (10, 11) einsetzbar ist.

4. Sicherheitskontaktschiene nach einem der vorherigen Ansprüche,
**dadurch gekennzeichnet**, daß der Nadelkontaktkopf (15) zentrisch oder exzentrisch an einem Ende des Nadelkontaktstiftes (14) angeordnet ist.

5. Sicherheitskontaktschiene nach einem der vorherigen Ansprüche,
**dadurch gekennzeichnet**, daß die Befestigungsvorrichtung als Schraubklemmvorrichtung oder als Federklemmvorrichtung ausgebildet ist.

6. Sicherheitskontaktschiene nach einem der vorherigen Ansprüche,
**dadurch gekennzeichnet**, daß die Nadelkontaktspitze (18) einen Winkel von 50° bis 90°, vorzugsweise 70°, einschließt.

7. Sicherheitskontaktschiene nach einem der vorherigen Ansprüche,
**dadurch gekennzeichnet**, daß die Zonen an dem befestigungsseitigen Ende des Nadelkontaktelementes (10, 11) Ausnehmungen (12, 13) aufweisen.

## Claims

1. A safety contact rail for power-operated installations and for protection of machines or areas by fuses, comprising a first and a second portion which bear electrically conductive zones isolated from one another and which, in the event of mutual contact caused by deformation of the safety contact rail, trigger a switching pulse for supplying to an evaluation unit via circuit lines connected to the zones, **characterised in that** needle contact elements (10, 11) for fastening to the circuit lines (8, 9) are inserted in the zones, the needle contact element (10, 11) has a needle contact pin (14) and a needle contact head (15) with a device for securing it to the circuit line (8, 9), that the contact pin (14), starting from the head end, has a diameter which increases towards the opposite free end, and that a needle point (18) is integrally formed on the free end of the needle contact pin (14).

2. A safety contact rail according to claim 1**, characterised in that** the first portion is in the form of a hollow rubber section member (1) and the second portion is a sharp-edged rib (2) disposed in the rubber member (1).

3. A safety contact rail according to any of the preceding claims, **characterised in that** electric conductors are embedded in the zones, and a needle contact (10, 11) is insertable into the end region of each conductor.

4. A safety contact rail according to any of the preceding claims, **characterised in that** the needle contact head (15) is centrally or eccentrically disposed on one end of the needle contact pin (14).

5. A safety contact rail according to any of the preceding claims, **characterised in that** the securing device is in the form of a screw terminal device or a spring terminal device.

6. A safety contact rail according to any of the preceding claims, **characterised in that** the needle contact point (18) includes an angle in the range from 50° to 90°, preferably 70°.

7. A safety contact rail according to any of the preceding claims, **characterised in that** the zones are formed with recesses (12, 13) at the secured end of the needle contact element (10, 11).

## Revendications

1. Rail de contact de sécurité pour des installations actionnées par une force ainsi que pour la protection de machines ou d'espaces avec un premier et un deuxième segment, qui comportent des zones conductrices électriques disposées isolées l'une de l'autre, qui déclenchent lors d'un contact mutuel provoqué par la déformation du rail de contact de sécurité une impulsion de commande, qui peut être amenée par des lignes de commutation reliées aux zones à une unité d'exploitation,
caractérisé en ce que
dans les zones sont insérées des aiguilles de contact (10, 11), sur lesquelles les lignes de commutation (8, 9) peuvent être fixées, en ce que l'élément de l'aiguille de contact (10, 11) comporte une tige de contact en pointe (14) et une tête de contact de l'aiguille (15) avec un dispositif de fixation pour la ligne de commutation (8, 9), en ce que la tige de contact (14) comporte, à partir de son extrémité du côté tête, un diamètre qui augmente jusqu'à l'extrémité libre opposée et en ce qu'à l'extrémité libre de la tige de contact (14) est formée une pointe d'aiguille (18).

2. Rail de contact de sécurité selon la revendication 1,
caractérisé en ce que
le premier segment est réalisé sous la forme d'un profilé creux en caoutchouc (1) et le deuxième segment sous la forme d'une nervure du type tranchant (2) placée dans le profilé creux en caoutchouc (1).

3. Rail de contact de sécurité selon une des revendications précédentes,
caractérisé en ce que
dans les zones sont encastrés des conducteurs électriques, au niveau de l'extrémité frontale desquels est appliquée respectivement une aiguille de contact (10, 11).

4. Rail de contact de sécurité selon une des revendications précédentes,
caractérisé en ce que
la tête de l'aiguille de contact (15) est placée centrée ou excentrée à une extrémité de la tige de l'aiguille de contact (14).

5. Rail de contact de sécurité selon une des revendications précédentes,
caractérisé en ce que
le dispositif de fixation est réalisé comme un dispositif de borne à vis ou comme un dispositif de borne à ressort.

6. Rail de contact de sécurité selon une des revendications précédentes,
caractérisé en ce que
la pointe de l'aiguille de contact (18) comporte un angle de 50 à 90°, de préférence de 70°.

7. Rail de contact de sécurité selon une des revendications précédentes,
caractérisé en ce que
les zones comportent à l'extrémité du côté fixation de l'élément de l'aiguille de contact (10, 11) des évidements (12, 13).
